# EUROPEAN PATENT SPECIFICATION

(11) **EP 0 708 718 B1**
(45) Date of publication and mention of the grant of the patent: **07.01.1998**
(21) Application number: 94923037.9
(22) Date of filing: 11.07.1994
(51) Int. Cl.: B60N 2/44

(54) **A SEAT COVER FOR MOTOR VEHICLES**
SITZBEZUG FÜR KRAFTFAHRZEUGE
HOUSSE POUR SIEGES D'AUTOMOBILES

(30) Priority: 20.07.1993 IT PR930019 U
(43) Date of publication of application: 01.05.1996
(73) Proprietor: Cortellazzi, Giovanni, I-43052 Colorno (IT)
(72) Inventor: Cortellazzi, Giovanni, I-43052 Colorno (IT)
(74) Representative: Gotra, Stefano
(86) International application number: IT9400109
(87) International publication number: WO9503192

(56) References cited:
- CH-A- 342 343
- DE-A- 3 419 728
- FR-A- 2 641 956
- FR-A- 2 673 366
- GB-A- 896 090
- GB-A- 1 032 588
- GB-A- 1 503 460
- US-A- 2 420 974
- US-A- 4 621 004

## Description

### Technical Field.

The term seat cover, as used herein, is meant to comprise auxialiary covers which extend over all or nearly all of a vehicle front or back seat surface, the seats being taken to be of a type having a backrest and a seat which are already covered.

### Background Art.

The substance normally used to cover the stuffing of car seats is usually made of synthetic cloth, leather or imitation leather, all of which have the drawback of not allowing sufficient air to reach the passenger's body. Prior art solutions have addressed this drawback by coupling the cloth or leather with layers of porous material, or with a lined cloth to allow transpiration of air in the body-cloth contact zones.
Seat covers of this type, however, are not truly effective and furthermore do not easily adapt to various types of seat equipped in different car models.

The most used type of seat covers are made with a simple layer of elasticated cloth, or are made of a non-elastic material such as cotton, which can be adapted to various seat types thanks to the presence in them of transversal pleats.
Especially during the summer, cushions and backrests are used, made of straw, raffia, synthetic thread weaves or plasticated metal thread weaves (spring cushions), or wooden beads which are positioned on the seat cover such as to create a circulation of air for the body.
These cushions or backrests are fixed by laces or elastic ribbons provided with hooks to the metal frame of the car seat.
The above-described cushions and backrests all have the drawback of being very difficult to fix immovably to the seat, with the result that they move about with the person sitting on the seat and are therefore uncomfortable. Also, by their moving about they cause extra wear on the seat cover or the seat cloth itself.

FR-A-2 641 956 relates to a cushion which comprises an upper permeable element, a lower water proof element and an intermediate element designed to consent the passage of forced air.
The cushion does not extend on all the seat nor on all the backrest and so it may be difficult to fix the cushion immovably to the seat and to the backrest.
Furthermore the document does not disclose how the intermediate element can be removed from the cushion and replaced.
The upper permeable element is a conventional cloth and so the human body can not directly contact the intermediate element.
GB-A-1 032 588 discloses a cushion for seats of vehicles, comprising an intermediate layer of heat-insulating material provided between external layers. One external layer consists of a wear resistant material, such as coated fabric, the other external layer consists of textile material, the intermediate layer consists of thin sheets of cellular plastics having a continuous skin on both sides.
The document does not disclose means for extracting the intermediate layer from the cushion and the cushion is fixed to the seat and to the backrest through many elements which may require time for the mounting.
GB-A-896 090 relates to a motor vehicle seat comprising a textile fabric overlay for the entire seating surface and backrest surface. Said overlay has its side, front and rear edges welded to side, front and rear surfaces of the seat, which latter surfaces are made of thin thermoplastic sheet material.
This document discloses only a particular seat for a motor vehicle and not a cover for the seat.
DE-A-3 419 728, which is the closest prior art cited in the preamble of claim 1, relates to a process for making a cover for a seat, which shows a conventional cover for the entire seating surface and backrest surface: the cover forms two bags to embrace the seat and the backrest respectively. This document does not disclose a cover provided with an additional element inserted between two cover's layers made up of different materials.

### Disclosure of the Invention.

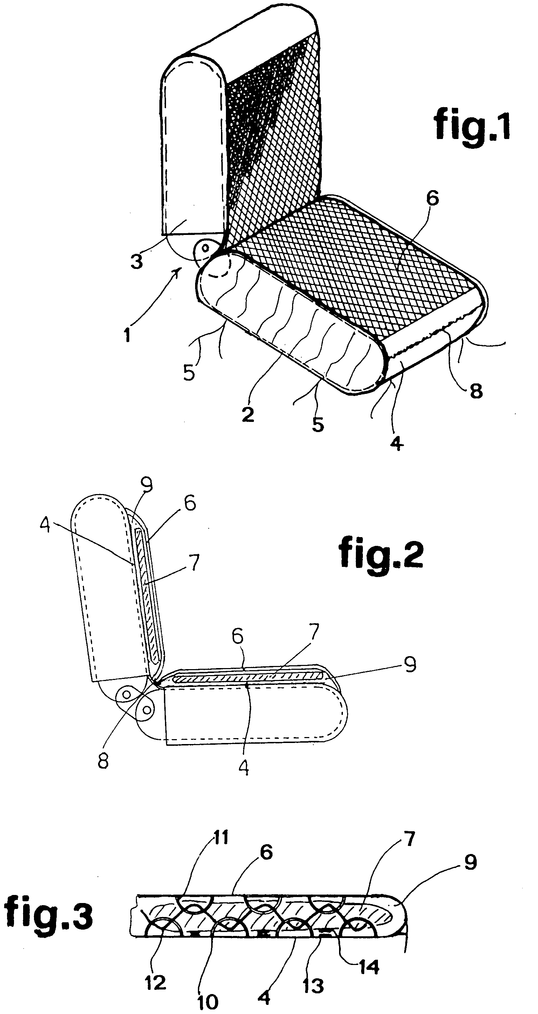

The main aim of the present invention is to provide a seat cover which can carry out all of its normal functions and which if so desired can be turned inside out and fitted reversibly, and which allows for the application of cushions and/or backrest thereto without a need for laces and elasticated ribbons, while at the same time guaranteeing a perfect positioning and adherence to the seat of the cushion or backrest.
This and other aims besides are all attained by the seat cover of the invention as set forth in claim 1. Additional features of the invention are given in the, in the appended dependent claims.
This and other characteristics will better emerge from the following description of a preferred embodiment of the invention illustrated purely by way of non-limiting example in the accompanying figures of the drawings, in which:
- figure 1 is a perspective view of the seat cover applied to a seat;
- figure 2 is a seat cover in a transversal section, with a cushion inserted;
- figure 3 is a detail of a type of fixture between the cloth of the seat cover and a perforated cloth or anti-snag netting.
With reference to the figures, 1 denotes a seat comprising a seat 2 and a backrest 3.
A seat cover is spread on the seat, comprising one or more layers of elasticated or non-elasticated cloth 4, which completely covers the seat, including on the sides thereof. The seat cover is fitted with elastic ribbons 5 for fixing the cover to the metal frame of the seat.
In the zone of the seat cover destined to come into contact with the human body, a layer of perforated cloth 6 is applied. The cloth is preferably synthetic, and can be an anti-snag thread netting.
The application of the layer of perforated cloth 6 might be realized in various ways, such as for example by means of partial sewing, leaving open a zone for passage of a ventilating cushion 7 or a raffia mat or other additional element, said open zone being closed by temporary fixture means 8 such as a zip or velcro, or press-studs, or laces or a draw-cord.
A further system for closing up the two layers, illustrated in figure 3, provides the stitching with a certain number of through-holes 10 in the seat cover cloth, and a similar number of through-holes 11 sewn into the peripheral edge of the perforated cloth, which holes are staggered with respect to the other holes such that a draw-cord 12 can be passed through all of the holes in turn and pulled tight.
Between the layer of perforated cloth 6 and the cloth of the seat cover, one or two pockets 9 are created which can be used for insertion of an additional element 7 for greater aeration of the body of the occupant.
This version is used during the summer period for greater coolness.
During the winter the seat cover can be reversed such that it presents the elasticated or non-elasticated cloth for contact with the human body. The additional element 7 is inserted in the pockets 9 and adheres firmly to the seat as it is inserted between two layers of stretched cloth.
In a further embodiment, the perforated cloth can be completely sewn along the edges and apertures could be made in the cloth of the seat cover such that the additional elements can be inserted into the pockets which can then be closed by zips or the like.
In a still further embodiment, the perforated cloth can be completely sewn along the edges and can present a transversal aperture at a conjunction zone of the seat with the backrest of the seat.
Thus the means for closing the seat cover would be hidden from view in the join between the backrest and the seat of the car seat.
In a still further embodiment the aperture for the insertion of the cushions and backrest is made in the front zone of the seat. At the aperture, a horizontal snap ribbon is sewn into the cloth and hooks to an underlying snap ribbon applied to the cloth of the seat cover, stretching the cloth vertically,
Lengths of ribbon 13 can be applied on the cover such as to adhere to corrisponding lengths 14 applied on the additional element, all with the aim of facilitating adhesion of the seat cover additional element,

If no additional element is inserted, the seat cover can be reversed to present a normal cloth.

## Claims

1. A seat cover for motor vehicles, for application on a seat (2) and a backrest (3) and covering also the sides of the seat (2) and of the backrest (3),
characterised in that it comprises an upper layer (6) of perforated cloth or netting applied on a lower cloth (4) which constitutes a basic seat cover, in such a way as to form at least a supplementary pocket (9) which extends in the zone of contact of said layer (6) with the human body, into which pocket (9) an additional removable element (7) may be inserted through an aperture of the pocket and may come into direct contact with the human body, the aperture being provided with means (8) for a temporary closure of the aperture, in such a way as the additional element (7) can be inserted into or removed from its pocket (9).

2. A seat cover as in claim 1, wherein the aperture is a transversal aperture at a conjunction zone of the seat (2) with the backrest (3) of the seat.

3. A seat cover as in claim 1, wherein the seat cover affords an aperture in a front zone thereof provided with a horizontal snap-ribbon sewn to the layer (6) of perforated cloth or netting, which snap-ribbon hooks to an underlying velvet-ribbon applied to the cloth (4).

4. A seat cover as in claim 1, wherein the layer (6) of perforated cloth or netting is completely sewn along its edges to the cloth (4) and the aperture is made in said cloth (4).

5. A seat cover as in claim 1, wherein said fixing means to fix said layer (6) of perforated cloth or netting to said cloth (4) are lines of stitching along a peripheral edge of the perforated cloth or netting.

6. A seat cover as in claim 1, wherein said means (8) are constituted by a zip fastener.

7. A seat cover as in claim 1, wherein said means (8) are constituted by a "Velcro" or snap-ribbon.

8. A seat cover as in claim 1, wherein first portions (13) of snap-ribbon applied to the cloth (4) adhere to corresponding second portions (14) of snap-ribbon associated to the additional element (7).

9. A seat cover as in claim 1, wherein the cover is shaped in such a way as it can be reversed to put the cloth (4) in contact with the human body and the layer (6) in contact with the seat (2) and the backrest (3).

10. A seat cover as in claim 1, wherein the additional element (7) is a prepacked cushion or mat.

## Patentansprüche

1. Schonbezug für Kraftfahrzeuge, zur Anbringung auf einen Sitz (2) und auf eine Rückenlehne (3), wobei der besagte Schonbezug auch die Seiten des Sitzes (2) und der Rückenlehne (3) einhüllt, dadurch gekennzeichnet, daß er eine obere Schicht (6) aus gelochtem oder netzförmigem Stoff enthält, die auf einen unteren Stoff (4), welcher einen Sitzgrundbezug darstellt, derart angebracht wird, daß wenigstens eine Zusatztasche (9) gebildet wird, die sich in dem Kontaktbereiches der besagten Schicht (6) mit dem menschlichen Körper erstreckt, wobei in der Tasche (9) ein zusätzliches, entfernbares Element (7) durch eine Öffnung der Tasche hindurch angeordnet werden und mit dem menschlichen Körper in Kontakt kommen kann, und wobei die Öffnung mit Mitteln (8) versehen ist, damit die Öffnung zeitweise derart verschließbar ist, daß das zusätzliche Element (7) in der Tasche (9) angeordnet oder aus selbiger entfernt werden kann.

2. Schonbezug nach Anspruch 1, wobei die Öffnung eine querverlaufende Öffnung ist in einem Verbindungsbereich des Sitzes (2) mit der Sitzrückenlehne (3) des Sitzes.

3. Schonbezug nach Anspruch 1, wobei der Sitzbezug in seinem vorderen Bereich eine Öffnung aufweist und mit einem horizontalen Reißband versehen ist, das an die Schicht (6) des gelochten oder netzförmigen Stoffes angenäht ist, wobei das Reißband an einen unteren Samtstreifen haftet, der an dem Stoff (4) angebracht ist.

4. Schonbezug nach Anspruch 1, wobei die Schicht (6) des gelochten oder netzförmigen Stoffes vollständig entlang seinen Rändern an den Stoff (4) angenäht ist und die Öffnung in dem besagten Stoff (4) angebracht worden ist.

5. Schonbezug nach Anspruch 1, wobei die besagten Befestigungsmittel zur Befestigung der besagten Schicht (6) des gelochten oder netzförmigon Stoffes an den besagten Stoff (4) als Nählinien entlang einer Umfangskante des gelochten oder netzförmigen Stoffes ausgebildet sind.

6. Schonbezug nach Anspruch 1, wobei die besagten Mittel (8) als Reißverschluß ausgebildet sind.

7. Schonbezug nach Anspruch 1, wobei die besagten Mittel (8) als "Velcro" oder Druckband ausgebildet sind.

8. Schonbezug nach Anspruch 1, wobei erste Anteile (13) des an dem Stoff (4) angebrachten Druckbandes an entsprechende zweite Anteile (14) des mit dem zusätzlichen Element (7) verbundenen Druckbandes anhaften.

9. Schonbezug nach Anspruch 1, wobei der Bezug derart ausgebildet ist, daß er wendbar ist, um den Stoff (4) mit dem menschlichen Körper in Kontakt zu bringen und die Schicht (6) mit dem Sitz (2) und der Rückenlehne (3) in Kontakt zu bringen.

10. Schonbezug nach Anspruch 1, wobei das zusätzliche Element (7) ein abgepacktes Polster oder eine Matte ist.

## Revendications

1. Une housse pour sièges de véhicules, pour une application sur un siège (2) et un dossier (3) et couvrant également les côtés du siège (2) et du dossier (3),
caractérisée en ce qu'elle comprend une couche supérieure (6) de tissu perforé ou grille appliquée sur une couche inférieure (4) constituant une housse pour siège de base, de manière a former au moins une poche supplémentaire (9) qui s'étend dans la zone de contact de ladite couche (6) avec le corps humain, et dans laquelle poche (9) un élément additionnel amovible (7) peut être inséré au travers d'une ouverture de la poche et sera en contact direct avec le corps humain, l'ouverture étant formée avec des moyens (8) pour une fermeture temporaire de l'ouverture, de manière à ce que l'élément additionnel (7) puisse être inséré ou enlevé de la poche (9).

2. Une housse pour sièges selon la revendication 1, dans laquelle l'ouverture est une ouverture transversale en une zone de conjonction du siège (2) avec le dossier (3) du siège.

3. Une housse pour siège selon la revendication 1, dans laquelle la housse pour siège présente une ouverture dans une zone frontale pourvue d'un ruban de fermeture horizontal cousu sur la couche (6) de tissu perforé ou grille, lequel ruban de fermeture s'accroche à un ruban velours situé au dessous et appliqué au tissu (4).

4. Une housse pour siège selon la revendication 1, dans laquelle la couche (6) de tissu perforé ou grille est complètement cousue le long de ses bords (4) et l'ouverture est formée dans ledit tissu (4) .

5. Une housse pour siège selon la revendication 1, dans laquelle lesdits moyens de fixation pour fixer ladite couche (6) de tissu perforé ou grille audit tissu (4) sont des lignes de couture le long des bords périphériques du tissu perforé ou grille.

6. Une housse pour siège selon la revendication 1, dans laquelle lesdits moyens (8) sont constitués par une fermeture éclair.

7. Une housse pour siège selon la revendication 1, dans laquelle lesdits moyens 8 sont constitués par un "Velcro" ou ruban de fermeture.

8. Une housse pour siège selon la revendication 1, dans laquelle les premières portions (13) de "Velcro" appliquées sur le tissu (4) adhèrent aux secondes portions (14) de "Velcro" correspondantes associées à l'élément aditionnel (7).

9. Une housse pour siège selon la revendication 1, dans laquelle la housse est formée de manière à pouvoir être retournée pour mettre le tissu (4) en contact avec le corps humain et la couche (6) en contact avec le siège (2) et le dossier (3).

10. Une housse pour siège selon la revendication 1, dans laquelle l'élément additionnel (7) est un coussin ou tapis pré-confectionné.
